# EUROPÄISCHE PATENTANMELDUNG

(11) **EP 1 915 936 A2**
(43) Veröffentlichungstag der Anmeldung: **30.04.2008**
(21) Anmeldenummer: 07018668.9
(22) Anmeldetag: 22.09.2007
(51) Int. Cl.: A47K 17/02, A47K 3/00

(54) **An einer Gebäudewand befestigbare Haltevorrichtung zum Halten von Gegenständen oder Ergreifen durch Personen**

(30) Priorität: 18.10.2006 DE 102006050238
(71) Anmelder: Roth, Eckart, 72213 Altensteig (DE)
(72) Erfinder: Roth, Eckart, 72213 Altensteig (DE)
(74) Vertreter: Vogler, Bernd

(57) **Zusammenfassung**

Eine Haltevorrichtung (1) ist an einer Gebäudewand, insbesondere im Sanitärbereich, mittels einer Saugeinrichtung (2) befestigbar, die mindestens einen Saugkopf (3, 4) mit einem Saugteller und einer Betätigungseinrichtung für den Saugteller aufweist, so dass die Saugeinrichtung (2) durch Betätigen der Betätigungseinrichtung von Hand an der Gebäudewand festsaugbar und von dieser lösbar ist. Die Saugeinrichtung (2) trägt einen Lagerblock (9), der um eine zur Gebäudewand parallele Schwenkachse schwenkbar ist. Der Lagerblock (9) trägt einen rechtwinkelig zur Schwenkachse verlaufenden Haltestab (11) zum Halten von Gegenständen oder Ergreifen durch Personen.

## Beschreibung

Die Erfindung betrifft eine Haltevorrichtung, die an einer Gebäudewand, insbesondere im Sanitärbereich, befestigbar ist, mit einer an der Gebäudewand befestigbaren Befestigungseinrichtung und einem Haltestab zum Halten von Gegenständen oder Ergreifen durch Personen, der bei an der Gebäudewand befestigter Befestigungseinrichtung in einer Gebrauchslage in den von der Gebäudewand begrenzten Raum vorsteht.

Derartige Haltevorrichtungen werden beispielsweise zum Halten eines Vorhanges verwendet, wenn eine sitzende Person von einer anderen Person abgebraust und gewaschen wird. Der Vorhang befindet sich etwa in Hüfthöhe zwischen den beiden Personen und soll das Bespritzen der Kleidung der waschenden Person verhindern. Ferner kann sich die sitzende ältere oder behinderte Person beim Aufstehen an dem Haltestab abstützen.

Die bekannten Haltevorrichtungen werden unverrückbar fest an der Gebäudewand befestigt. Dies bringt mit sich, dass der Haltestab je nach seiner Verwendung, den örtlichen Gegebenheiten oder der Größe der Personen ungünstig platziert sein kann. Ferner ist der in den Raum vorstehende Haltestab im Falle der Nichtbenutzung hinderlich. Der Haltestab könnte selbst dann im Wege sein, wenn er zur Seite schwenkbar wäre. In Badezimmern und dergleichen Räumen herrschen regelmäßig beengte Platzverhältnisse, so dass ein zur Seite Klappen häufig nicht möglich ist.

Der vorliegenden Erfindung liegt daher die Aufgabe zugrunde, eine Haltevorrichtung der eingangs genannten Art zu schaffen, die vielseitiger verwendbar und bei Nichtbenutzung nicht hinderlich ist.

Diese Aufgabe wird erfindungsgemäß dadurch gelöst, dass die Befestigungseinrichtung eine Saugeinrichtung mit mindestens einem Saugkopf mit einem Saugteller und einer Betätigungseinrichtung für den Saugteller aufweist, so dass der jeweilige Saugteller und mit diesem der zugehörige Saugkopf durch Betätigen der Betätigungseinrichtung von Hand an der Gebäudewand festsaugbar und von dieser lösbar ist, und dass die Saugeinrichtung einen um eine zur Gebäudewand parallele Schwenkachse schwenkbaren Lagerblock trägt, der den rechtwinkelig zur Schwenkachse verlaufenden Haltestab hält.

Voraussetzung für die Befestigung der erfindungsgemäßen Haltevorrichtung ist eine ebene Wand. Diese Voraussetzung ist im Sanitärbereich erfüllt, der regelmäßig gefliest ist, so dass die Saugeinrichtung an den Fliesen fixiert werden kann. Die Saugeinrichtung und somit der Haltestab kann an jeder beliebigen Stelle befestigt werden, so dass man sich an unterschiedliche Verwendungen, verschiedene räumliche Situationen oder Personengrößen anpassen kann. Die Haltevorrichtung kann auch jederzeit mühelos versetzt werden. Hierzu ist lediglich eine Betätigung der Betätigungseinrichtung von Hand erforderlich.

Da der Haltestab über den Lagerblock verschwenkt werden kann, lässt sich der Griffstab zur Gebäudewand in eine Nichtgebrauchsstellung bewegen. Dabei kann den eventuellen beengten Platzverhältnissen durch eine geeignete Platzierung der Haltevorrichtung an der Wand Rechnung getragen werden.

Des Weiteren muss die Schwenkachse nicht vertikal ausgerichtet sein. Die Saugeinrichtung kann man ja in jeder Drehlage an der Gebäudewand positionieren, so dass man die Schwenkachse auch horizontal ausrichten oder in jeder beliebigen Winkellage zwischen der horizontalen und der vertikalen Lage verlaufen lassen kann.

Es versteht sich, dass man den Haltestab auch zum Halten von beliebigen anderen Gegenständen verwenden kann, die man zu einer stehenden, sitzenden oder liegenden Person hin- und wieder wegschwenken will. Auch in diesem Falle kann man die Haltevorrichtung in der jeweils günstigsten Lage an der Gebäudewand fixieren.

Zur Vielfalt der Anwendungsmöglichkeiten gehört ferner, dass man den Haltestab zum Ergreifen durch eine Person ausbilden und mit einer Handgriffeinrichtung versehen kann. Beispielsweise kann man die Saugeinrichtung so an der Wand positionieren, dass sich der Haltestab in Richtung auf eine sitzende Person hin erstreckt, die zum Aufstehen die Handgriffeinrichtung des Haltestabes ergreifen und sich hochziehen kann.

Zweckmäßige Ausgestaltungen der Erfindung sind in den Unteransprüchen angegeben.

Nachstehend wird ein Ausführungsbeispiel der Erfindung anhand der Zeichnung im Einzelnen erläutert. Es zeigen:
- Figur 1: eine in einem Raum sitzende Person, neben der eine erfindungsgemäße Haltevorrichtung an der Wand positioniert ist, deren Haltestab einen der Übersichtlichkeit wegen nicht eingezeichneten Vorhang hält, wobei der Haltestab in eine Nichtgebrauchslage nach oben gegen die Wand geschwenkt ist,
- Figur 2: die Anordnung nach Figur 1, wobei der Haltestab in seine von der Wand abstehende Gebrauchslage geschwenkt ist,
- Figur 3: eine der Figur 1 mit dem Unterschied entsprechende Anordnung, dass die Haltevorrichtung eine um 90° gedrehte Position einnimmt, so dass die Schwenkachse vertikal verläuft und der Haltestab zur Seite gegen die Wand geschwenkt ist,
- Figur 4: die gleiche Anordnung wie in Figur 3, wobei der Haltestab in Richtung zu der sitzenden Person hin geschwenkt ist,
- Figur 5: eine andere Anwendung, bei der die Saugeinrichtung an einer neben einer beispielsweise auf einem WC sitzenden Person verlaufenden Wand fixiert ist und der Haltestab mit einer Handgriffeinrichtung versehen und zu der Person hin geschwenkt ist, so dass sich die Person mit Hilfe des Haltestabes zum Aufstehen hochziehen kann, wobei der Haltestab in die andere der beiden Steckaufnahmen des Lagerblocks als in den Figuren 1 bis 4 eingesteckt ist,
- Figur 6: eine der Figur 5 entsprechende Anordnung, wobei die Haltevorrichtung jedoch an einer der Person gegenüberliegenden Wand befestigt ist,
- Figur 7: die in den Figuren 1 bis 6 verwendete Haltevorrichtung in Schrägansicht, wobei der abgeschnitten dargestellte Haltestab in die gleiche Steckausnehmung wie in den Figuren 1 bis 4 gesteckt ist,
- Figur 8: die Anordnung nach Figur 7 in Draufsicht gemäß Pfeil VIII in Figur 7,
- Figur 9: die Anordnung nach Figur 8 in Seitenansicht gemäß Pfeil IX,
- Figur 10: das mit einem verstellbaren Wandanschlagelement versehene Ende des Haltestabs in gesonderter Darstellung,
- Figur 11: die Anordnung nach Figur 7 von schräg unten her gesehen in explodierter Darstellungsweise,
- Figur 12: die Anordnung nach Figur 11 in der Figur 8 entsprechender Draufsicht, wobei der Lagerblock und der Haltestab leicht nach oben geschwenkt gezeichnet sind,
- Figur 13: die Anordnung nach Figur 12 in Seitenansicht gemäß. Pfeil XIII,

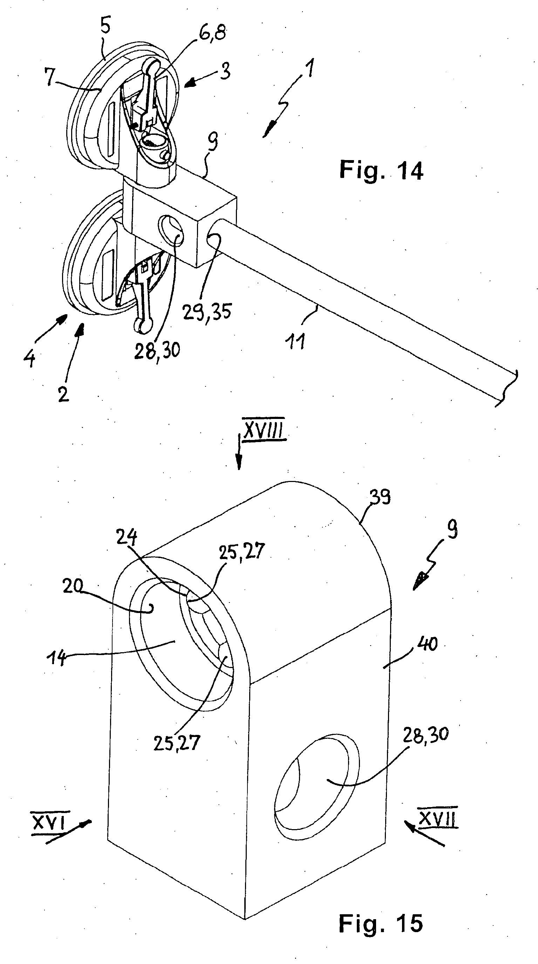

- Figur 14: die in den Figuren 1 bis 6 verwendete Haltevorrichtung, wobei der abgeschnitten gezeichnete Haltestab in die gleiche Steckausnehmung wie in den Figuren 5 und 6 gesteckt ist,
- Figur 15: den Lagerblock der erfindungsgemäßen Haltevorrichtung in gesonderter Darstellung in Schrägansicht,
- Figur 16: den Lagerblock nach Figur 15 in Seitenansicht gemäß Pfeil XVI,
- Figur 17: den gleichen Lagerblock in zur Figur 16 rechtwinkligen Seitenansicht gemäß Pfeil XVII und
- Figur 18: den gleichen Lagerblock in Draufsicht gemäß Pfeil XVIII.

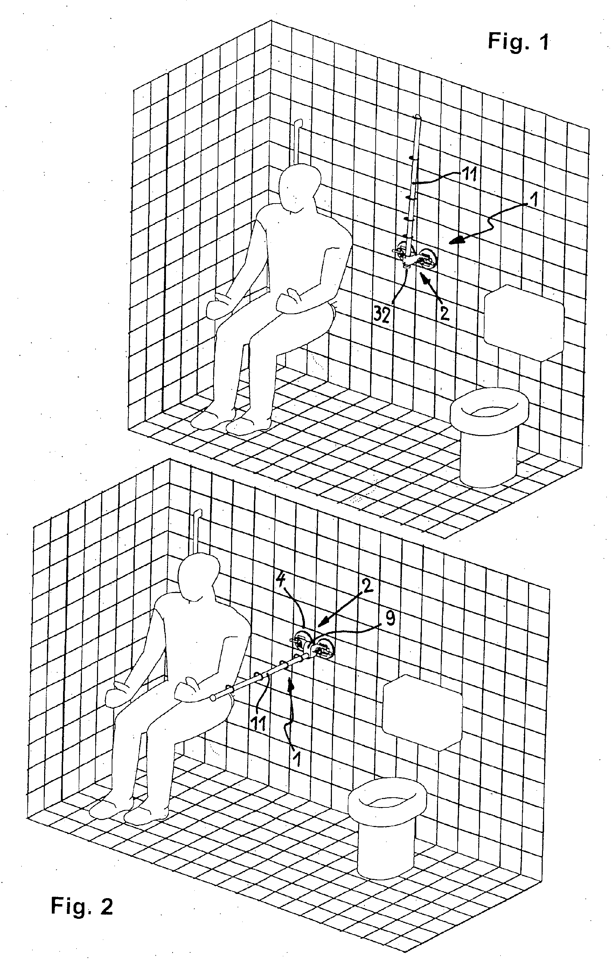

Die aus der Zeichnung hervorgehende Haltevorrichtung 1 ist in den Figuren 1 bis 6 jeweils an einer Wand eines zum Sanitärbereich gehörenden Gebäuderaums in verschiedenen Positionen und Drehlagen befestigt.

Dabei weist die Haltevorrichtung 1 eine Befestigungseinrichtung auf, die von einer Saugeinrichtung 2 gebildet wird. Die Saugeinrichtung 2 enthält zwei Saugköpfe 3, 4, die jeweils einen Saugteller 5 und eine von Hand betätigbare Betätigungseinrichtung 6 aufweisen. Die beiden Saugköpfe 3, 4 sind gleich ausgebildet, so dass die genannten Bezugsziffern nur beim Saugteller 3 eingetragen worden sind. Der jeweilige Saugteller besteht aus gummiartig flexiblem Material und ist an der Unterseite des betreffenden Saugkopfes 3, 4 angeordnet. Der Saugteller 5 ragt ringsum über das Saugkopfgehäuse 7 vor, das einen Hohlraum enthält, in den der mittlere Bereich des Saugtellers 5 hochgezogen werden kann. Bei diesem Hochziehen stützt sich der Außenbereich des Saugtellers 5 an der Unterseite des Saugkopfgehäuses 7 ab.

Die Betätigungseinrichtung 6 ist dem jeweiligen Saugteller 5 zugeordnet und kann zwischen einer unwirksamen und einer wirksamen Stellung verstellt werden. In der unwirksamen Stellung sitzt der Saugteller 5 lose am Saugkopfgehäuse 7 und ist zum Saugkopfgehäuse 7 hin unbelastet. In der wirksamen Stellung der Betätigungseinrichtung 6 ist der Saugteller 5 dagegen zum Saugkopfgehäuse 7 hin hochgezogen.

Die Betätigungseinrichtung 6 weist einen außen am Saugkopf 3, 4 angeordneten, zwischen der wirksamen Stellung und der unwirksamen Stellung verschwenkbaren Betätigungshebel 8 auf. In der Zeichnung befindet sich der Betätigungshebel 8 in seiner wirksamen Stellung, in der der Saugteller 5 hochgezogen ist. Die Schwenkbewegung des Betätigungshebels 8 wird über eine Exzentereinrichtung in die nach oben gehende Bewegung des Saugtellers 5 umgesetzt.

Zum Befestigen der Saugeinrichtung 2 und somit der Haltevorrichtung 1 an der betreffenden Gebäudewand werden die Saugköpfe 3, 4 mit in der unwirksamen Stellung befindlichem Betätigungshebel 8 an die Wand angesetzt. Liegen die Saugteller 5 an der Gebäudewand an, wird der Betätigungshebel 8 in seine wirksame Stellung verschwenkt, so dass der mit seinem Außenbereich vom Saugkopfgehäuse 7 weiterhin gegen die Gebäudewand gehaltene Saugteller 5 mit seinem mittleren Bereich von der Gebäudewand weggezogen wird. Hierdurch entsteht zwischen der Gebäudewand und dem Saugteller 5 ein Unterdruck, so dass der jeweilige Saugkopf 3, 4 an der Gebäudewand festgehalten wird. Zum Lösen des jeweiligen Saugkopfes 3, 4 von der Gebäudewand wird der Betätigungshebel 8 wieder in die unwirksame Stellung zurückgeschwenkt, so dass der Saugteller 5 entlastet und der betreffende Saugkopf von der Gebäudewand weggenommen werden kann. Dabei kann es erforderlich sein, den Rand des Saugtellers 5 lokal kurz anzuheben, damit Umgebungsluft unter den Saugteller gelangen kann.

Derartige Saugeinrichtungen sind bekannt und gehen beispielsweise aus der EP 1 183 981 A2 hervor, so dass sich eine weitere diesbezügliche Beschreibung erübrigt.

Die Gebäudewand muss an der Befestigungsstelle der Saugeinrichtung 2 ausreichend eben sein. Dies ist bei gefliesten Wänden erfüllt, soweit man die Saugköpfe 3, 4 nicht auf eine der zwischen den Fliesen verlaufenden Fugen setzt.

Es wird bereits jetzt darauf hingewiesen, dass die Saugeinrichtung anstelle von zwei Saugköpfen prinzipiell auch nur einen Saugkopf oder mehr als zwei Saugköpfe aufweisen könnte.

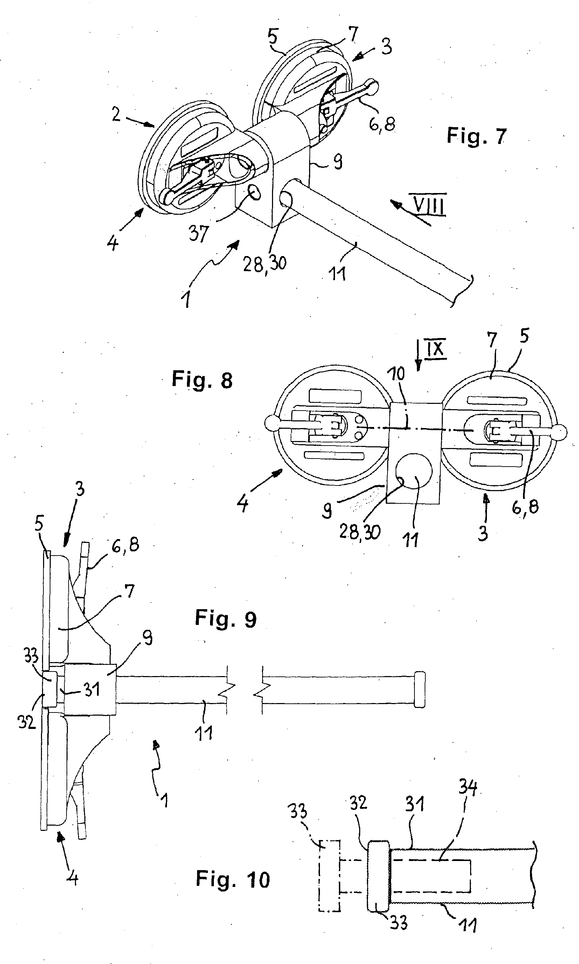

Die Haltevorrichtung 1 weist ferner einen Lagerblock 9 auf, der von der Saugeinrichtung 2 getragen wird. Der Lagerblock 9 ist um eine zur betreffenden Gebäudewand, d.h. zur von den Saugtellern 5 aufgespannten Befestigungsebene parallele Schwenkachse 10 (siehe Figur 8) schwenkbar mit der Saugeinrichtung 2 verbunden. Der Lagerblock 9 dient zum Halten eines Haltestabs 11, der sich rechtwinkelig zur Schwenkachse 10 vom Lagerblock 9 weg erstreckt.

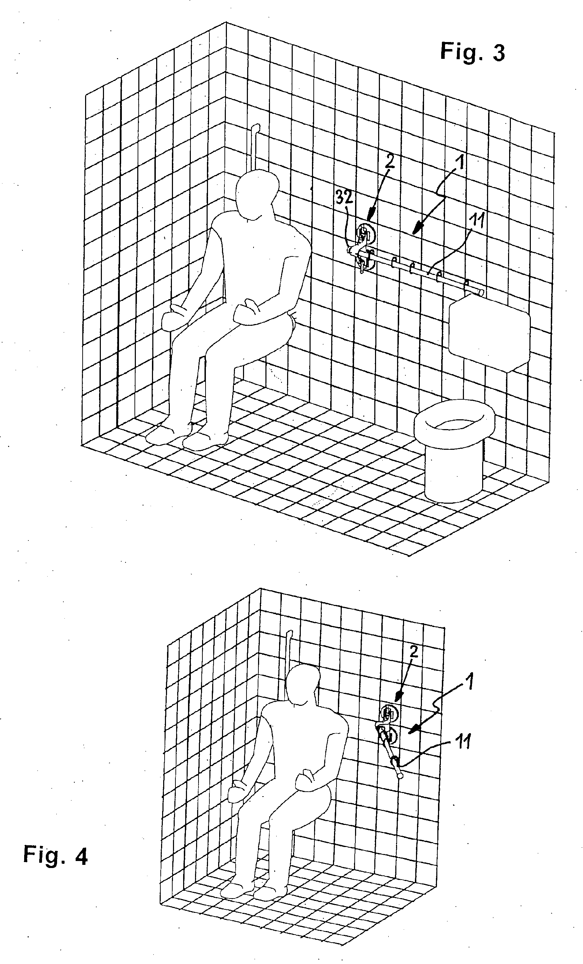

Der Haltestab 11 kann, wie in den Figuren 1 bis 4 gezeigt, als Vorhangstange ausgebildet sein. Dabei wurde in den Figuren 1 bis 4 der Vorhang der Übersichtlichkeit wegen weggelassen. Die zugehörigen Vorhangringe, die auf den Haltestab 11 aufgesteckt sind, sind dagegen angedeutet. Die Haltevorrichtung 1 wurde in den Figuren 1 bis 4 etwa in Hüfthöhe neben einem Sitz für die angedeutete Person an der betreffenden Gebäudewand befestigt. Je nach der Drehlage, mit der die Saugeinrichtung 2 an der Gebäudewand positioniert ist, verläuft die Schwenkachse 10 horizontal (Figuren 1 und 2) oder vertikal (Figuren 3 und 4). Dem entsprechend kann der Haltestab 11 zwischen einer nach oben (Figuren 1 und 2) bzw. zur Seite (Figuren 3 und 4) gegen die Gebäudewand geschwenkten Nichtgebrauchslage und einer in den Raum vorstehenden Gebrauchslage verschwenkt werden. In Figur 2 ist der Haltestab 11 etwa um 90° nach unten geschwenkt. In Figur 4 ist der Haltestab 11 aus seiner seitlichen Nichtgebrauchslage in das Rauminnere verschwenkt, wobei er noch eine Schräglage einnimmt und somit noch nicht vollständig um etwa 90° in seine Gebrauchslage verschwenkt worden ist. Der vom Haltestab 11 herabhängende Vorhang trennt die dargestellte Person, die gewaschen werden muss, von der das Waschen vornehmenden Person.

Für den Haltestab 11 gibt es beim Ausführungsbeispiel zwei Befestigungsmöglichkeiten am Lagerblock 9, wie später noch erläutert wird. Im Falle der Figuren 1 bis 4 wurde eine Befestigungsmöglichkeit gewählt, bei der der Haltestab 11 nicht über die etwa rechtwinkelig von der Gebäudewand abstehende Gebrauchslage hinaus verschwenkt werden kann. Der Haltestab 11 wird daher in Figur 2 sozusagen von selbst in der Höhe gehalten.

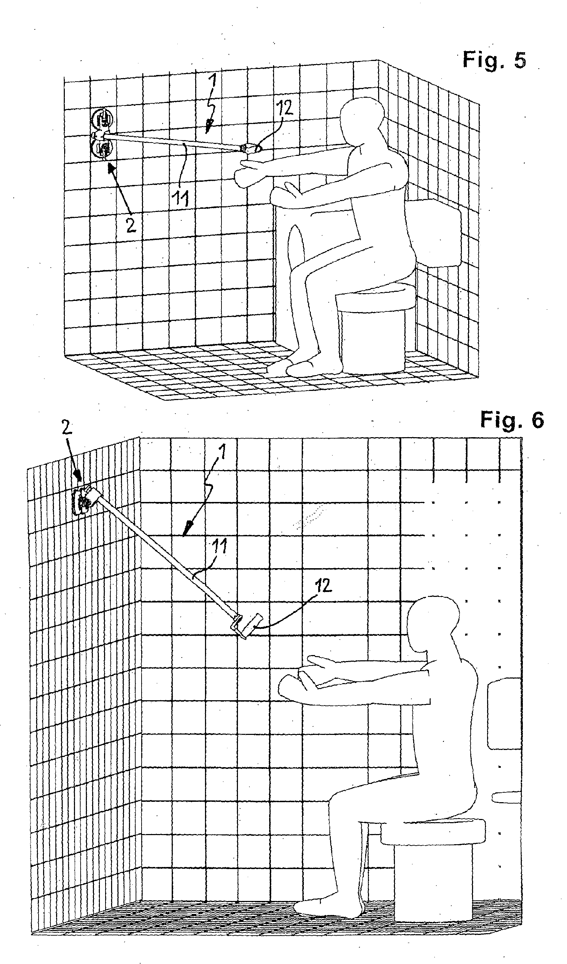

Im Falle der Figuren 5 und 6 dient der Haltestab 11 zum Ergreifen durch eine sitzende Person. Dabei ist der Haltestab 11 mit einer Handgriffeinrichtung 12 ausgestattet, so dass sich die Person durch Ergreifen der Handgriffeinrichtung 12 mittels des Haltestabes 11 hochziehen und aufstehen kann. Für diese Anwendung der erfindungsgemäßen Haltevorrichtung 1 wurde für die Befestigung des Haltestabes 11 am Lagerblock 9 die andere Befestigungsmöglichkeit gewählt. Der Haltestab 11 kann hier etwa um 180° um die Schwenkachse 10 verschwenkt werden.

Die Schwenkachse 10 wird von einem Schwenkachselement 13 gebildet. Das Schwenkachselement 13 weist einen kreisrunden Querschnitt auf und kann von einem Rohrstück gebildet werden oder auch aus Vollmaterial bestehen. Die beiden Saugköpfe 3, 4 sind über das Schwenkachselement 13 miteinander verbunden. Der Lagerblock 9 ist zwischen den beiden Saugköpfen 3, 4 angeordnet und dabei schwenkbar am Schwenkachselement 13 gelagert. Hierzu weist der Lagerblock 9 eine durchgehende, vom Schwenkachselement 13 durchgriffene Drehlagerausnehmung 14 auf.

Das Schwenkachselement 13 ist lösbar mit den beiden Saugköpfen 3, 4 verbunden, so dass sich ein baukastenartiger Aufbau ergibt. Dabei ist das Schwenkachselement 13 lösbar mit den Saugköpfen 3, 4 zusammengesteckt. Ferner kann das Schwenkachselement 13 lösbar mit den Saugköpfen 3, 4 verrastet sein.

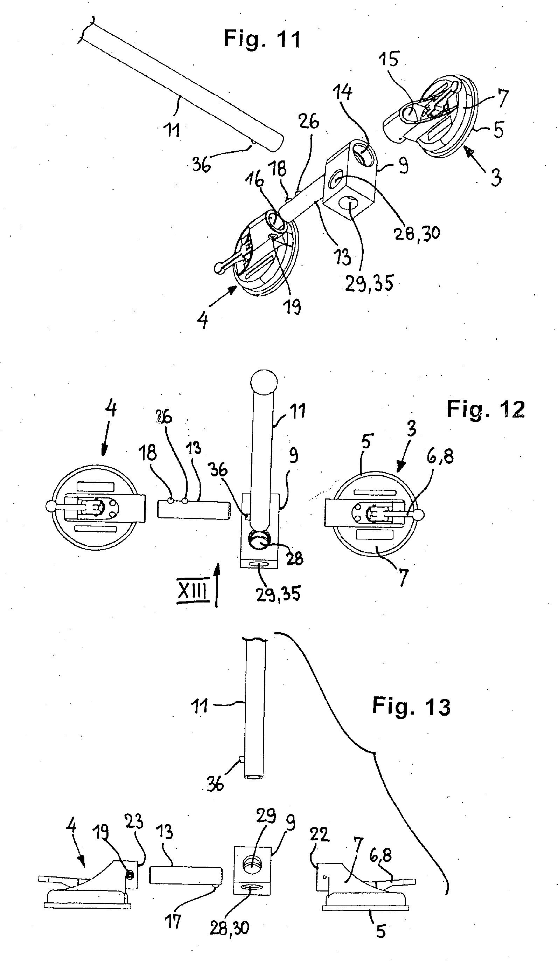

Bei jedem Saugkopf 3, 4 weist das Saugkopfgehäuse 7 eine in Richtung der Schwenkachse 10 gerichtete Steckausnehmung 15 bzw. 16 auf, in die das Schwenkachselement 13, nach dem man den Lagerblock 9 aufgesteckt hat, eingesteckt wird. Zum lösbaren Verrasten des Schwenkachselements 13 in den Steckausnehmungen 15, 16 kann das Schwenkachselement 13 an seinen beiden in die Steckausnehmungen 15, 16 eingreifenden Endbereichen jeweils ein an seinem Außenumfang vorstehendes, federbelastetes Rastelement 17 bzw. 18 aufweisen, dem ein Rastloch 19 in der Wandung der Steckausnehmung 15 bzw. 16 zugeordnet ist. In der Zeichnung ist in den Figuren 11 und 13 nur das Rastloch 19 des Saugkopfes 4 sichtbar. Das am anderen Saugkopf 3 angeordnete Rastloch ist dem Betrachter abgewandt. Zu den Figuren 11 und 13 wird ferner darauf hingewiesen, dass das Schwenkachselement 13 aus seiner dargestellten Drehlage zuerst so weit verdreht werden muss, dass die Rastelemente 17, 18 in einer Linie mit den Rastlöchern 19 liegen. Zum Einstecken des Schwenkachselements 13 in die Steckausnehmungen 15, 16 müssen die Rastelemente 17, 18 entgegen der Federkraft nach innen gedrückt werden. Erreichen die Rastelemente 17; 18 die Rastlöcher 19, schnappen sie unter der Federwirkung in die Rastlöcher 19. Um die Verbindung zu lösen, kann man die Rastelemente 17, 18 von außen her durch die Rastlöcher 19 nach innen drücken.

Prinzipiell könnte man auch einen der beiden Saugköpfe 3. 4 weglassen. Von der Stabilität her gesehen sind jedoch zwei Saugköpfe 3, 4 mit zwischen den Saugköpfen angeordnetem Lagerblock 9 vorteilhaft.

Die Drehlagerausnehmung 14 ist beidseitig gestuft, so dass sie im Durchmesser erweiterte Endbereiche 20, 21 aufweist. Bei der Montage wird die kreisrunde Partie des Saugkopfgehäuses 7, die die betreffende Steckausnehmung 15, 16 umschließt, in den zugewandten erweiterten Endbereich 20 bzw. 21 der Drehlagerausnehmung 14 gesteckt.

Zur Sicherung des Lagerblocks 9 in axialer Richtung bildet jeder Saugkopf 3, 4 einen Stirnanschlag 22, 23 (siehe Figur 13), der am Lagerblock 9 zur Anlage gelangt.

Der Lagerblock 3 und mit diesem der Haltestab 11 sollte in der jeweiligen Schwenklage um das Schwenkachselement 13 festgelegt werden können bzw. in der gewünschten Schwenklage stehen bleiben. Zu diesem Zwecke ist eine zwischen dem Lagerblock 9 und dem Schwenkachselement 13 wirksame Festhalteeinrichtung zum Festhalten des Lagerblockes 9 in unterschiedlichen Winkelstellungen auf dem Schwenkachselement 13 vorgesehen.

Dies könnte prinzipiell dadurch erreicht werden, dass eine den Lagerblock 9 durchgreifende und mit diesem in Gewindeeingriff stehende Stellschraube vorhanden ist, die von außen her betätigt werden kann und gegen das Schwenkachselement 13 wirkt. Diese Möglichkeit würde jedoch bei jeder Einstellung des Schwenkwinkels ein Lösen und Festziehen der Stellschraube erfordern.

Eine zweckmäßigere Möglichkeit wäre deshalb die, dass die Drehlagerausnehmung 14 einen Reibbelag 24 aufweist, so dass der Lagerblock 9 zwar auf dem Schwenkachselement 13 verdreht werden kann, in der jeweiligen Schwenklage jedoch durch die Reibkraft selbsttätig hält. Der Reibbelag könnte auch am Schwenkachselement vorgesehen sein. Denkbar wäre ferner, dass sowohl die Drehlagerausnehmung als auch das Schwenkachselement einen Reibbelag aufweisen.

Zusätzlich zum Reibbelag 24 oder anstelle des Reibbelags könnte die Festhalteeinrichtung auch von einer lösbaren Dreh-/Rastverbindungseinrichtung gebildet werden. Hiermit ist gemeint, dass man in bestimmten Schwenkstellungen des Lagerblockes 9 ein Verrasten mit dem Schwenkachselement 13 erhält, wobei die Verrastung durch Ausüben einer ausreichend großen, von der jeweiligen Person ausgeübten Schwenkkraft gelöst wird, so dass sich der Lagerblock 9 in die nächste vorgegebene Schwenkstellung verschwenken lässt.

Beim dargestellten Ausführungsbeispiel wird die Dreh-/Rastverbindung von über den Umfang verteilt angeordneten Rastausnehmungen 25 in der Wandung der Drehlagerausnehmung 14 gebildet, denen ein federnd gelagertes Rastglied 26 (siehe die Figuren 11 und 12) am Schwenkachselement 13 zugeordnet ist. Das Rastglied 26 wird durch die Federkraft nach radial außen belastet, so dass es am Umfang des Schwenkachselements 13 vorsteht. In den durch die Rastausnehmungen 25 vorgegebenen Schwenkstellungen greift das Rastglied 26 in die jeweilige Rastausnehmung 25 ein. Übt man auf den Haltestab 11 eine ausreichende Schwenkkraft aus, wird das Rastglied 26 von der Wandung der Drehlagerausnehmung 14 nach radial innen gedrückt. Gelangt beim Verschwenken die nächste Rastausnehmung 25 zum Rastglied 26, schnappt dieses in diese Rastausnehmung ein. Die der Wandung der Drehlagerausnehmung 14 zugewandte Stirnseite des Rastgliedes 26 kann ballig oder kugelig ausgebildet sein. Die Stirnseite des Rastgliedes 26 könnte auch keilförmig geneigt sein, so dass sich die Verrastung nur in einer Schwenkrichtung des Haltestabes 11 lösen lässt, während in der entgegengesetzten Schwenkrichtung ein festes Verriegeln stattfindet. Es versteht sich, dass man die Rastausnehmungen 25 in ihrer Querschnittsgestalt entsprechend anpassen müsste.

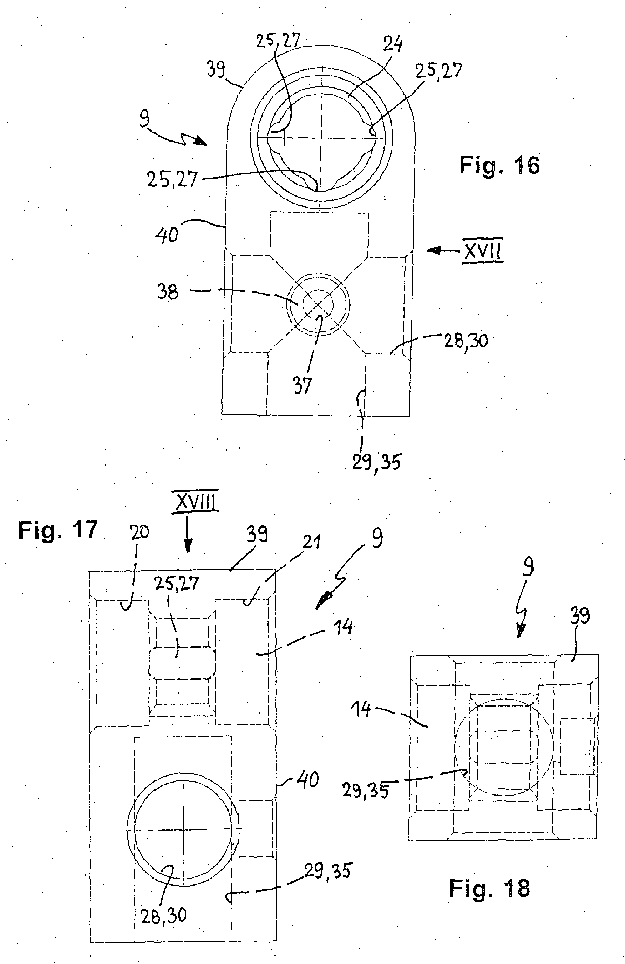

Beim dargestellten Ausführungsbeispiel ist die Stirnseite des Rastgliedes 26 ballig ausgebildet. Dementsprechend weisen die Rastausnehmungen 25 einen kreisbogenartigen Querschnitt auf, wie insbesondere aus Figur 16 ersichtlich ist.

Die Rastausnehmungen 25 können von in axialer Richtung durchgehenden Rastnuten 27 gebildet werden. Dies ist vor allem fertigungstechnisch günstig.

Prinzipiell könnte die Anordnung auch umgekehrt so getroffen sein, dass das Rastglied in der Wandung der Drehlagerausnehmung und die Rastausnehmungen am Schwenkachselement angeordnet sind.

Der Lagerblock 9 weist zwei rechtwinkelig zur Schwenkachse 10 und somit rechtwinkelig zum Schwenkachselement 13 gerichtete Steckaufnahmen 28, 29 auf, die dem zugewandten Endbereich des Haltestabes 11 zugeordnet sind, so dass der Haltestab 11 wahlweise in die eine oder andere der Steckaufnehmungen 28, 29 gesteckt und dort festgelegt werden kann. Prinzipiell wäre es auch möglich, zwei Haltestäbe 11 in einer der beiden Steckaufnahmen 28, 29 festzulegen.

Ferner wäre es in Abwandlung des dargestellten Ausführungsbeispiels möglich, dass der Lagerblock 9 nur eine einzige Steckaufnahme 28 bzw. 29 enthält.

Die beiden Steckaufnahmen 28, 29 sind rechtwinkelig zueinander gerichtet.

Eine der beiden Steckaufnahmen, die Steckaufnahme 28, wird von einem mit Abstand zur Schwenkachse 10 und somit neben dem Schwenkachselement 13 angeordneten Durchgangsloch 30 gebildet. Das Durchgangsloch 30 verläuft somit parallel zu einer Tangente der Drehlagerausnehmung 14. In diesem Falle kann der Haltestab 11 ganz durch das Durchgangsloch 30 und somit durch den Lagerblock 9 gesteckt werden, dass sein Endbereich 31 (siehe Figuren 9 und 10) das Durchgangsloch 30 und somit den Lagerblock 9 durchgreift und über den Lagerblock 9 vorsteht. Der vorstehende Endbereich 31 trägt einen Wandanschlag 32, der auch unmittelbar von der Stirnseite des Haltstab-Endbereichs 31 gebildet werden könnte.

Mit dem vor dem Lagerblock 9 angeordneten Wandanschlag 32 wird erreicht, dass der Halteblock 9 und mit diesem der Haltestab 11 nur so weit in die betreffende Richtung geschwenkt werden kann, bis der Wandanschlag 32 an der Gebäudewand anschlägt, an der die Haltevorrichtung 1 befestigt ist. Dies ist aus den Figuren 1 bis 4 ersichtlich. Der dortige Haltestab 11 ist durch das Durchgangsloch 30 gesteckt. Verschwenkt man den Haltestab 11 aus seiner Nichtgebrauchslage gemäß Figur 1 nach unten in die Gebrauchslage gemäß Figur 2, stößt der Wandanschlag 32 gegen die Gebäudewand, so dass sich der Haltestab 11 nicht weiter nach unten bewegen kann. Die sitzende Person kann sich daher auch am Haltestab 11 abstützen, ohne ein Verschwenken des Haltestabs 11 nach unten hin befürchten zu müssen. Im Falle der Figuren 3 und 4 begrenzt der Wandanschlag 32 den Schwenkweg des Haltestabs 11 zu der sitzenden Person hin.

Der Wandanschlag 32 ist in Längsrichtung des Haltestabes 11 verstellbar, so dass man eine verstellbare Schwenkwegbegrenzung des Haltestabes 11 erhält. Hierzu kann am Haltestabende ein in Haltestab-Längsrichtung verstellbares Wandanschlagelement 33 angeordnet sein. In Figur 10 ist das Wandanschlagelement 33 in einer weiter nach außen verstellten Lage strichpunktiert angedeutet. Das Wandanschlagelement 33 kann mit einem an ihm angeordneten Gewindebolzen 34 in den Haltestab 11 eingeschraubt sein, so dass sich die Längslage des Wandanschlagelements 33 durch Verdrehen in die eine oder andere Richtung verstellen lässt.

Eine andere Möglichkeit des Verstellens des Wandanschlags besteht darin, dass der Haltestab 11 in seiner Längsrichtung verschiebbar und in der jeweiligen Längslage feststellbar in dem Durchgangsloch 30 gelagert ist. Dies kann beispielsweise mittels einer durch den Lagerblock 9 geschraubten und gegen den Haltestab 11 wirkenden Stellschraube erreicht werden. Diese Variante ist nicht dargestellt.

Bei der anderen Steckaufnahme 29 des Lagerblockes 9 handelt es sich um ein mit Bezug auf das Schwenkachselement 13 radial gerichtetes Sackloch 35. Bei der aus den Figuren 5 und 6 hervorgehenden Verwendung der Haltevorrichtung 1 ist der Haltestab 11 in dem Sackloch 35 festgelegt. Er lässt sich dann um einen Bereich von etwa 180° verschwenken, so dass er zu beiden Seiten der Saugeinrichtung 2 gegen die Gebäudewand geschwenkt werden kann.

Der Haltestab 11 ist in beiden Anwendungsfällen im Durchgangsloch 30 bzw. im Sackloch 35 lösbar arretiert. Hierzu kann - sieht man von der oben geschilderten Möglichkeit der Verwendung einer Stellschraube zur Verstellung der Längslage des Haltestabs ab - ein lösbares Verrasten vorgesehen sein.

Zu diesem Zwecke kann am Haltestab 11 ein den Rastelementen 17 und 18 des Schwenkachselementes 13 entsprechendes Rastelement 36 angeordnet sein, das durch Federkraft nach außen hin beaufschlagt ist. Dem Rastelement 36 ist ein Rastloch 37 am Lagerblock 9 zugeordnet, in das das Rastelement 36 einrastet. Das eingerastete Rastelement 36 ist, da das Rastloch 37 nach außen mündet, von außen her zugänglich, so dass das Rastelement 36 zum Herausziehen des Haltestabes 11 aus der Steckaufnahme nach innen gedrückt werden kann. Es versteht sich, dass das Rastloch 37, wie auch das weiter oben beschriebene Rastloch 19, eine ringförmig umlaufende Anschlagfläche 38 bildet, an der das Rastelement 36 zur Anlage gelangt.

Das Rastloch 37 kann wie beim Ausführungsbeispiel so angeordnet sein, dass das Rastelement 36 unabhängig davon, ob der Haltestab 11 in das Durchgangsloch 30 oder das Sackloch 35 gesteckt ist, in das gleiche Rastloch 37 eingreift.

Der Lagerblock 9 bildet eine die Drehlagerausnehmung 14 enthaltende Schwenkachs-Lagerpartie 39 und eine von der Schwenkachs-Lagerpartie 39 seitlich abstehende Haltestab-Lagerpartie 40, die das Durchgangsloch 30 und das Sackloch 35 enthält. Die Haltestab-Lagerpartie 40 weist zweckmäßigerweise eine quaderartige Gestalt auf. Die Schwenkachs-Lagerpartie 39 ist an der der Haltestab-Lagerpartie 40 entgegengesetzten Seite abgerundet, so dass das Verschwenken um das Schwenkachselement 13 nicht behindert wird. Der Lagerblock 9 kann ein einstückiges Formteil sein.

## Patentansprüche

1. Haltevorrichtung, die an einer Gebäudewand, insbesondere im Sanitärbereich, befestigbar ist, mit einer an der Gebäudewand befestigbaren Befestigungseinrichtung und einem Haltestab zum Halten von Gegenständen oder Ergreifen durch Personen, der bei an der Gebäudewand befestigter Befestigungseinrichtung in einer Gebrauchslage in den von der Gebäudewand begrenzten Raum vorsteht, **dadurch gekennzeichnet, dass** die Befestigungseinrichtung eine Saugeinrichtung (2) mit mindestens einem Saugkopf (3, 4) mit einem Saugteller (5) und einer Betätigungseinrichtung (6) für den Saugteller (5) aufweist, so dass der jeweilige Saugteller (5) und mit diesem der zugehörige Saugkopf (3, 4) durch Betätigen der Betätigungseinrichtung (6) von Hand an der Gebäudewand festsaugbar und von dieser lösbar ist, und dass die Saugeinrichtung (2) um eine zur Gebäudewand parallele Schwenkachse (10) schwenkbaren Lagerblock (9) trägt, der den rechtwinkelig zur Schwenkachse (10) verlaufenden Haltestab (11) hält.

2. Haltevorrichtung nach Anspruch 1, **dadurch gekennzeichnet, dass** die Schwenkachse (10) von einem von dem mindestens einen Saugkopf (3, 4) abstehenden Schwenkachselement (13) gebildet wird.

3. Haltevorrichtung nach Anspruch 2, **dadurch gekennzeichnet, dass** die Saugeinrichtung (2) zwei über das Schwenkachselement (13) miteinander verbundene Saugköpfe (3, 4) aufweist.

4. Haltevorrichtung nach Anspruch 3, **dadurch gekennzeichnet, dass** der Lagerblock (9) zwischen den beiden Saugköpfen (3, 4) angeordnet ist.

5. Haltevorrichtung nach einem der Ansprüche 2 bis 4, **dadurch gekennzeichnet, dass** jeder Saugkopf (3, 4) einen Stirnanschlag zur Sicherung des Lagerblocks (9) in axialer Richtung bildet.

6. Haltevorrichtung nach einem der Ansprüche 2 bis 5, **dadurch gekennzeichnet, dass** das Schwenkachselement (13) lösbar mit dem mindestens einen Saugkopf (3, 4) verbunden ist.

7. Haltevorrichtung nach Anspruch 6, **dadurch gekennzeichnet, dass** das Schwenkachselement (13) lösbar mit dem mindestens einen Saugkopf (3, 4) zusammengesteckt ist.

8. Haltevorrichtung nach Anspruch 6 oder 7, **dadurch gekennzeichnet, dass** das Schwenkachselement (13) lösbar mit dem mindestens einen Saugkopf (3, 4) verrastet ist.

9. Haltevorrichtung nach einem der Ansprüche 2 bis 7, **dadurch gekennzeichnet, dass** der Lagerblock (9) eine durchgehende, vom Schwenkachselement (13) durchgriffene Drehlagerausnehmung (14) aufweist.

10. Haltevorrichtung nach Anspruch 9, **dadurch gekennzeichnet, dass** eine zwischen dem Lagerblock (9) und dem Schwenkachselement (13) wirksame Festhalteeinrichtung zum Festhalten des Lagerblocks (9) in unterschiedlichen Winkelstellungen auf dem Schwenkachselement (13) vorhanden ist.

11. Haltevorrichtung nach Anspruch 10, **dadurch gekennzeichnet, dass** die Drehlagerausnehmung (14) und/oder das Schwenkachselement (13) einen Reibbelag (24) aufweisen.

12. Haltevorrichtung nach Anspruch 10 oder 11, **dadurch gekennzeichnet, dass** die Festhalteeinrichtung eine lösbare Dreh-/Rastverbindungseinrichtung ist.

13. Haltevorrichtung nach Anspruch 12, **dadurch gekennzeichnet, dass** die Dreh-/Rastverbindung von über den Umfang verteilt angeordneten Rastausnehmungen (25) in der Wandung der Drehlagerausnehmung (14) oder am Schwenkachselement und einem den Rastausnehmungen (25) zugeordneten, federnd gelagerten Rastglied (26) am Schwenkachselement (13) bzw. an der Wandung der Drehlagerausnehmung gebildet wird.

14. Haltevorrichtung nach einem der Ansprüche 1 bis 13, **dadurch gekennzeichnet, dass** der Lagerblock (9) mindestens eine zur Schwenkachse (10) rechtwinkelige, dem zugewandten Endbereich des Haltestabes (11) zugeordnete Steckaufnahme (28, 29) aufweist.

15. Haltevorrichtung nach Anspruch 14, **dadurch gekennzeichnet, dass** der Lagerblock (9) eine Steckaufnahme (28) in Gestalt eines mit Abstand zur Schwenkachse (10) angeordneten Durchgangsloches (30) aufweist.

16. Haltevorrichtung nach Anspruch 15, **dadurch gekennzeichnet, dass** der Endbereich des Haltestabes (11) das Durchgangsloch (30) durchgreift und einen Wandanschlag (32) bildet oder trägt.

17. Haltevorrichtung nach Anspruch 16, **dadurch gekennzeichnet, dass** am Haltestabende ein in Haltestab-Längsrichtung verstellbares Wandanschlagelement (33) angeordnet ist.

18. Haltevorrichtung nach Anspruch 16 oder 17, **dadurch gekennzeichnet, dass** der Haltestab (11) in seiner Längsrichtung verschiebbar und in der jeweiligen Längslage feststellbar in dem Durchgangsloch (30) gelagert ist.

19. Haltevorrichtung nach einem der Ansprüche 14 bis 18, **dadurch gekennzeichnet, dass** der Lagerblock (9) eine Steckaufnahme (29) in Gestalt eines mit Bezug auf die Schwenkachse (10) radial gerichteten Sacklochs (35) aufweist.

20. Haltevorrichtung nach einem der Ansprüche 14 bis 17 oder 19, **dadurch gekennzeichnet, dass** der Haltestab (11) lösbar mit der Steckaufnahme (28,29) verrastet ist.

21. Haltevorrichtung nach einem der Ansprüche 14 bis 20, **dadurch gekennzeichnet, dass** der Lagerblock (9) eine am Schwenkachselement (13) gelagerte Schwenkachs-Lagerpartie (39) und eine von der Schwenkachs-Lagerpartie (39) seitlich abstehende Haltestab-Lagerpartie (40) bildet, an der die mindestens eine Steckaufnahme (28, 29) angeordnet ist.

22. Haltevorrichtung nach Anspruch 21, **dadurch gekennzeichnet, dass** die Haltestab-Lagerpartie (40) eine quaderartige Gestalt aufweist.

23. Haltevorrichtung nach einem der Ansprüche 1 bis 22, **dadurch gekennzeichnet, dass** der Haltestab (11) als Vorhangstange ausgebildet ist.

24. Haltevorrichtung nach einem der Ansprüche 1 bis 22, **dadurch gekennzeichnet, dass** der Haltestab (11) zum Ergreifen durch Personen ausgebildet und mit einer Handgriffeinrichtung (12) versehen ist.
